# EUROPEAN PATENT SPECIFICATION

(11) **EP 1 311 968 B1**
(45) Date of publication and mention of the grant of the patent: **08.10.2008**
(21) Application number: 01958122.2
(22) Date of filing: 06.08.2001
(51) Int. Cl.: G06F 15/177, H04L 12/56

(54) **CENTRALIZED CONFIGURATION OF A TELECOMMUNICATION NETWORK**
ZENTRALISIERTE KONFIGURATION EINES TELEKOMMUNIKATIONSNETZES
CONFIGURATION CENTRALISEE D'UN RESEAU DE TELECOMMUNICATIONS

(30) Priority: 24.08.2000 FI 20001874
(43) Date of publication of application: 21.05.2003
(73) Proprietor: TeliaSonera Finland Oyj, 00510 Helsinki (FI)
(72) Inventor: LAHDENSIVU, Kimmo, FIN-33820 Tampere (FI); HIITOLA, Kari, FIN-00180 Helsinki (FI); VIRTANEN, Olli-Pekka, FIN-33900 Tampere (FI); VIINIKAINEN, Juha, FIN-33710 Tampere (FI)
(74) Representative: Simmelvuo, Markku Kalevi
(86) International application number: PCT/FI2001/000697
(87) International publication number: WO 2002/017111

(56) References cited:
- WO-A1-00/79738
- US-A- 6 029 196
- US-A- 6 061 332
- PATENT ABSTRACTS OF JAPAN & JP 2000 209231 A (RICOH CO LTD) 28 July 2000

## Description

### FIELD OF THE INVENTION

The invention relates to telecommunication. In particular, the invention relates to a new and advanced method for centralized configuration of a telecommunication network.

### BACKGROUND OF THE INVENTION

The use of the Internet has become common in the past few years. For example companies utilize the Internet nowadays in a variety of ways, in which case also the services provided by the operators to the companies have increased.

Among other things, the Internet uses IP protocol for data transfer (Internet Protocol, IP). The IP protocol defines for each device of the network at least one IP address that unambiguously identifies the device in question. Data is transmitted in packets, and besides the actual payload, each packet comprises the IP address of the sender and the recipient.

The IP address is 32-bits long, including four octets of eight bits. The IP address is divided into a network address and device address, with the network address having 1-3 octets of eight bits reserved. The network address identifies the network in question. The network address is unambiguous throughout the whole Internet. The device address identifies a separate device within the area of a certain network address. The device address is thus unambiguous within the area of a certain network address. The IP address consisting of both the network address and the device address identifies a separate device throughout the whole Internet. In addition to the above-mentioned, part of the bits reserved for the device address may be used to identify separate sub-networks within a certain IP network. In that case, a so-called network mask informs in the IP address of the sub-network part. Sub-network addresses are practical e.g. in such a case in which the IP network is divided into parts physically separate, such as several local area networks (Local Area Network, LAN). Thus in that case, an IP address comprises a network address, sub-network address, and a device address. The sub-network address is unambiguous in the area of a certain network address. The term IP network is hereinafter referred to the sequences of IP addresses comprising the same network and sub-network address, i.e. an IP network means a certain combination of network and network mask. Correspondingly, one IP address may be presented so that the IP address also comprises a network mask 255.255.255.255. The term IP address is hereinafter referred to the very combination of this kind. A typical example of the application in practice of the IP address is, for example, a medium-sized company which has several premises in the area of some town. Each premises have got one local area network. The devices have been so configured that all of them have the same network address. Correspondingly, the devices belonging to the same local area network have the same network address, in which case they form together the IP network. It is important to note that the above-mentioned is an example, naturally it is also possible to configure the networks in some other way, too.

There are currently two versions of the IP protocol. At present, the version most often used is version 4 (IPv4). A newer one, which is becoming common, is version 6 (IPv6). The versions in question differ from one another with respect to some specifications. For example, the IP address consists of 32 bits in version 4, whereas in version 6 it comprises 128 bits, which enables a considerably bigger number of addresses. IPv6 is also called the IPng (IP Next Generation, IPng). More detailed information is available e.g. on the home page of the standardizing organization responsible for its specifications, IETF, at the address http://www.ietf.org (Internet Engineering Task Force, IETF).

Network operators provide to their clients different IP additional services. The term IP additional service is hereinafter used to mean such a value added service in which an IP address is used at least as some parameter. Examples of an IP additional service are a firewall service, quality class service, and a VPN service.

A firewall service is used to mean a service in which e.g. on a server there is installed a piece of software which enables one to protect the resources of a certain IP network from the users of other networks. Firewall software filters all packets and determines, based on the regulations set, for each packet separately, whether the packet will be forwarded to its destination. Typically, it is e.g. checked whether the IP address of the sender of the packet in question is on the list of accepted senders. There are also firewall solutions of another kind. The firewall software may also be installed e.g. on a router, and the filtering may be carried out e.g. specifically for each user by means of user identification.

The quality class service is used to mean a service in which hierarchic quality classes are determined for different needs of data transmission. For example, the real-time transfer of video or audio requires connection features better than the average, in which case, in the case of a quality class service, it is possible to determine for the packets in question such a service class that the network prioritizes the packets in question.

The virtual network, i.e. VPN service (Virtual Private Network, VPN) is used to mean a private data network which utilizes the public telecommunication infrastructure. The privacy is achieved by means of a specific tunneling protocol and different security methods. The idea is to provide to the clients the advantages of a private network, but due to the shared public infrastructure, at lower costs. In the virtual private network, the connection is determined as being a channel between the IP networks at the ends of the connection.

The problem with the IP additional services nowadays is their configuration e.g. in the changes of the IP network. In case there are changes made in the IP network, such as e.g. adding an IP address, the corresponding configuration changes have to be made also in the devices generating the additional services in question. At present, the changes in question have to be done in each device separately and manually. There may be dozens of devices in which the changes have to be done, and they may be located physically at a considerably long distance from one another. This naturally wastes the resources of the network operator to a considerable extent.

Document US-A-60929196 of the prior art describes "An automatic client configuration system providing a system administrator with the ability to configure every client in a network with one file which resides on the server".

### OBJECTIVE OF THE INVENTION

The objective of the present invention is to disclose a new kind of method that eliminates the drawbacks referred to above, or at least significantly alleviates them. One specific objective of the invention is to disclose a method which enables one to carry out the configuration of the service parameters of the devices generating IP additional services, the adding of new IP aliases and/or the deleting of the existing IP aliases centrally and automatically. An IP alias is used to mean a set of IP address and/or IP networks.

### BRIEF DESCRIPTION OF THE INVENTION

In the present invention, a telecommunication network is configured centrally. The telecommunication network in question comprises one or more IP networks, which IP network comprises a set of IP addresses. In the telecommunication network in question, IP additional services are produced that have the IP address of the device using the additional service in question at least as one parameter. These devices using the same kind of service generate the IP alias, which thus comprises a set of IP addresses and/or IP networks.

In the present invention there is first made such a predetermined change in the IP alias that in some way influences the set of IP addresses belonging to the IP alias in question, such as e.g. the adding of a new IP network. This change may also be the deleting of an IP alias or the adding of a new IP alias. Alternatively, in the invention there is first a predetermined change made at least in one service parameter of the devices belonging to the IP alias. After this, those IP additional services are determined whose service parameters the change in the IP alias, or at least in one service parameter, influences, after which the necessary configuration changes are made in the additional service devices generating the IP additional services in question.

According to the present invention, prior to the change in question, an IP alias is generated from a predetermined set of IP addresses and/or IP networks. The entity of the IP addresses and/or IP networks forming the IP alias is logical, and is therefore in no way connected with the IP technology. The client, such as a company, may be assigned several IP aliases. It is also possible that the IP alias comprises IP addresses and/or IP networks of more than just one client. Further, prior to the change in question, a device configuration database is created that comprises the configuration information of those additional service devices the IP additional services generated by which have the IP address of the device using the additional service in question at least as one service parameter. Further, after this, the aforementioned configuration changes in the additional service devices are made automatically and in parallel utilizing the aforementioned device configuration database.

In one embodiment of the invention, the same IP address is arranged in several different IP aliases.

In one embodiment of the invention, the same IP network is arranged in several different IP aliases.

In one embodiment of the invention, firewall service, quality class service, and/or VPN service is provided as an IP additional service.

In one embodiment of the invention, the adding of at least one new IP address is done as a change in the IP alias.

In one embodiment of the invention, the deleting of at least one IP address is done as a change in the IP alias.

As compared with prior art, the present invention provides the advantage that it enables the centralized and automatic configuration of devices generating additional services caused by the change in the IP alias, and/or at least in one of its service parameter, which considerably saves the resources of the network operator. Further, since the configuration is done considerably faster, the additional services in question are kept up to date considerably better than before, and in this way the quality of the services provided by the network operators gets clearly better from the point of view of the client.

### BRIEF DESCRIPTION OF THE DRAWINGS

In the following section, the invention will be described by the aid of the attached embodiments with reference to the accompanying drawing, in which
Fig. 1 schematically represents one method of the invention; and
Fig. 2 schematically represents one method of the invention.

### DETAILED DESCRIPTION OF THE INVENTION

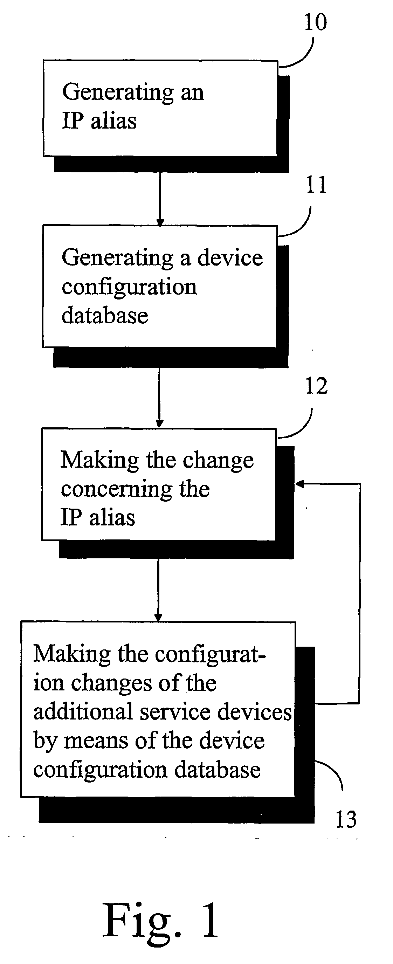

Fig. 1 schematically represents, by way of example, one method of the invention. At first, at step 10, from a predetermined set of IP addresses and/or IP networks, an IP alias is generated. For example, all the IP networks of a company's premises in Tampere are grouped as one single entity under the name "Tampere". After this, the Tampere IP alias may be used as a parameter in the IP additional services of the company, e.g. so that a hole is made in the firewall of the Helsinki premises of the company for users from Tampere and/or so that in the Espoo servers of the company, Tampere people are assigned a better service quality than the Helsinki people. Further, a virtual network connection may be established between the premises of Helsinki and Tampere.

At step 11, a centralized device configuration database is created that comprises the configuration information of those additional service devices the IP additional services created by which have the IP address of the device using the additional services in question at least as one parameter.

At step 12, the change in the IP alias is made. In the above-mentioned example 'Tampere', half a year later the Tampere premises get a new group, which is assigned a new IP network. In this situation, one new IP network is added to the IP alias 'Tampere'. The aforementioned change may also include the deleting of an IP alias or the adding of a new one. In the above-mentioned example concerning a company this could mean that new premises are established for the company in Oulu, in which case an IP alias of its own is created for the Oulu premises.

Alternatively, at step 12, a change is made at least in one service parameter of the devices belonging to the IP alias. In the above-mentioned example 'Tampere', a better service class is wanted in between Tampere and Helsinki because of a video conference connection to be transmitted. In that case, the service class of the IP alias Tampere is raised between Helsinki and Tampere.

At step 13, the configuration changes in the additional service devices are made automatically and in parallel utilizing the aforementioned device configuration database. In the above-mentioned example 'Tampere', the management system checks in what services the IP alias in question is used. The network operator gets a list of those services in which the made change causes a configuration change. The network operator has also a possibility to do a copy of the original IP alias, in which case the configuration changes are not made. When the network operator accepts that the changes are made in all the listed services, the management system automatically makes all the firewall, quality class and VPN service configurations in accordance with the new IP alias in all the devices in parallel. Further, the made changes are updated to the database, in which case a database created thereafter may be utilized always when there are changes made in the IP alias.

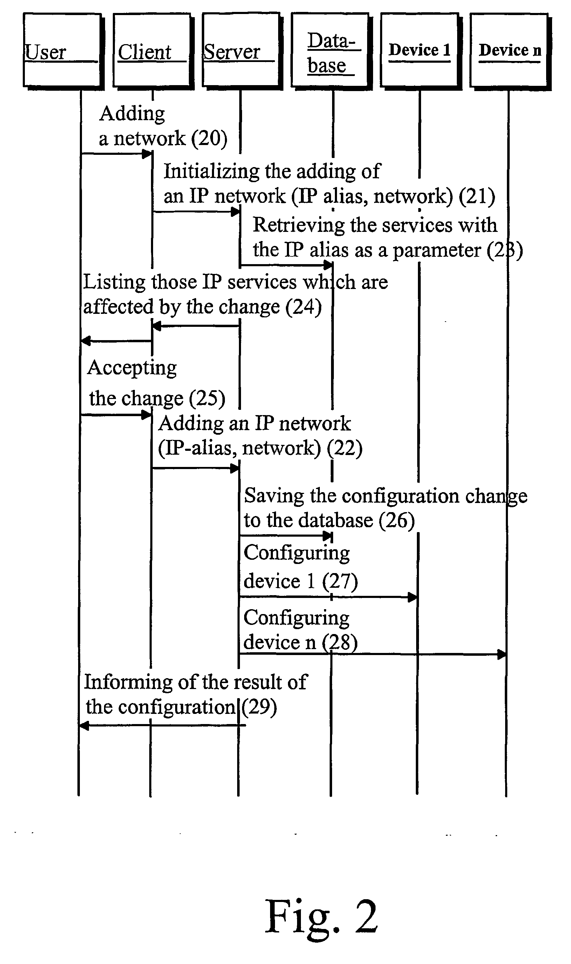

Fig. 2 schematically represents one method of the invention by way of example. The method as described in Fig. 2 is used to centrally configure the devices of the IP alias generating IP additional services, when an IP network is added to the IP alias in question. If we proceed with the example "Tampere", when a new group is involved in the development unit of Tampere to which a new IP network is assigned, at step 20, a user of the management system, i.e. e.g. a network operator, gives a command to the management system to add one network to the IP alias 'Tampere', which addition is then initialized at step 21 and completed at step 22. The management system is implemented e.g. as a client-server system. At step 23, from the device configuration database, information is retrieved on those IP services whose parameters use the IP alias to which the addition is being done. The configurations of the services are kept in the device configuration database, if that piece of information is got. At step 24, the network operator is displayed in the user interface those IP services which are affected by the change. Upon getting permission at step 25, the management system saves at step 26 the new configuration to the device configuration database and starts the configuration part of the devices. The configuration part starts a thread of configuration for each IP additional service in parallel, steps 27 and 28. After the configuration, the user of the management system, i.e. e.g. the network operator, is informed of the result of the configuration at step 29.

At its core, the management system functions as follows. At first, a change in some IP alias, and/or at least in one of its service parameters, is input in the management system. The device configuration database is searched for the piece of information on what services the aforementioned change affects, and the changes are saved to the database. Next, the management system configures each such device generating additional services that is affected by the aforementioned change. Since these devices generating additional services do not understand IP aliases, the configuration has to be done for each such IP address separately that is affected by the aforementioned change and/ or whose service parameters are affected by the aforementioned change.

The invention is not restricted merely to the examples of its embodiments referred to above, instead many variations are possible within the scope of the inventive idea defined by the claims.

## Claims

1. A method for centralized configuration of a telecommunication network, which telecommunication network comprises one or more IP networks, which IP network comprises a set of IP addresses, in which telecommunication network in question added value IP services are produced by service devices and used by user devices, and which service devices and user devices are comprised in the telecommunication network, and which method comprises the steps of:
generating an IP alias (10) for IP addresses and/or IP networks associated with one or more of said user devices, said IP alias being used as at least one parameter by said added value IP services, and
changing (12) one or more IP addresses and/or IP networks of said generated IP alias, or changing at least one service parameter of said user devices associated with said generated IP alias,
**characterized in that** the method further comprises the steps of:
storing, prior to the aforementioned change, into a configuration database (11) configuration information of said service devices, said configuration information comprising information about said at least one parameter used by said added value IP services, and
in response to said change in said IP alias, changing (13) correspondingly, in said service devices, said at least one parameter used by said added value IP services by utilizing said stored configuration information, said at least one parameter being changed in each service device automatically and in parallel by using parallel configuration threads for each service device.

2. The method according claim 1, **characterized in that** the method further comprises the step of:
arranging the same IP address in several different IP aliases.

3. The method according to claim 1 or 2, **characterized in that** the method further comprises the step of:
arranging the same IP network in several different IP aliases.

4. The method according to claim 1, 2 or 3, **characterized in that** the method further comprises the step of:
generating firewall service as an added value IP service.

5. The method according to claim 1, 2, 3 or 4, **characterized in that** the method further comprises the step of:
generating quality class service as an added value IP service.

6. The method according to claim 1, 2, 3, 4 or 5, **characterized in that** the method further comprises the step of:
generating VPN service as an added value IP service.

7. The method according to claim 1, 2, 3, 4, 5 or 6, **characterized in that** the method further comprises the step of:
doing the addition of at least one new IP address as a change in the IP alias.

8. The method according to claim 1, 2, 3, 4, 5, 6 or 7, **characterized in that** the method further comprises the step of
doing the deletion of at least one IP address as a change in the IP alias.

9. The method according to claim 1, 2, 3, 4, 5, 6, 7 or 8, **characterized in that** the method further comprises the step of:
doing the addition of at least one new IP network as a change in the IP alias.

10. The method according to claim 1, 2, 3, 4, 5, 6, 7, 8 or 9, **characterized in that** the method further comprises the step of:
doing the deletion of at least one IP network as a change in the IP alias.

11. The method according to claim 1, 2, 3, 4, 5, 6, 7, 8, 9 or 10, **characterized in that** the method further comprises the step of:
doing the addition of at least one new IP alias as a change in the IP alias.

12. The method according to claim 1, 2, 3, 4, 5, 6, 7, 8, 9, 10 or 11, **characterized in that** the method further comprises the step of:
doing the deletion of at least one IP alias as a change in the IP alias.

## Patentansprüche

1. Verfahren zur zentralisierten Konfiguration eines Telekommunikationsnetzes, wobei das Telekommunikationsnetz ein oder mehrere IP-Netze aufweist, wobei jedes IP-Netzwerk einen Satz von IP-Adressen aufweist, wobei in dem fraglichen Telekommunikationsnetz IP-Mehrwert-Dienste durch Diensteinrichtungen hergestellt werden und durch Benutzereinrichtungen benutzt werden und wobei die Diensteinrichtungen und Benutzereinrichtungen in dem Telekommunikationsnetz enthalten sind und wobei das Verfahren die folgenden Schritte aufweist:
Erzeugen eines IP-Alias bzw. -Beinamens (10) für IP-Adressen und/oder IP-Netze, zu welchen eine oder mehrere der Benutzereinrichtungen gehören, wobei die IP-Alias als wenigstens ein Parameter durch die IP- Mehrwert-Dienste benutzt werden, und
Verändern (12) einer oder mehrerer IP-Adressen und/oder IP-Netze der erzeugten IP-Alias oder Verändern wenigstens eines Dienstparameters dieser Benutzereinrichtungen, welche zu der erzeugten IP-Alias gehören,
**dadurch gekennzeichnet, dass** das Verfahren ferner die folgenden Schritte aufweist:
vor der vorher erwähnten Veränderung Speichern von Konfigurationsinformation über die Diensteinrichtungen in einer Konfigurationsdatenbank (11), wobei die Konfigurationsinformation Information über wenigstens einen Parameter aufweist, welcher durch die IP-Mehrwert-Dienste benutzt wird, und
in Antwort auf die Veränderung in der IP-Alias Verändern (13) in den Diensteinrichtungen entsprechend wenigstens einem Parameter, welcher durch die IP-Mehrwert-Dienste durch Benutzen der gespeicherten Konfigurationsinformation benutzt wird, wobei wenigstens ein Parameter in jeder Diensteinrichtung automatisch und parallel dazu durch Benutzen von parallelen Konfigurationsteilprozessen für jede Diensteinrichtung verändert wird.

2. Verfahren nach Anspruch 1, **dadurch gekennzeichnet, dass** das Verfahren ferner den folgenden Schritt aufweist:
Anordnen der gleichen IP-Adresse in mehreren unterschiedlichen IP-Aliasen.

3. Verfahren nach Anspruch 1 oder 2, **dadurch gekennzeichnet, dass** das Verfahren ferner den folgenden Schritt aufweist:
Anordnen des gleichen IP-Netzes in mehreren unterschiedlichen IP-Aliasen.

4. Verfahren nach Anspruch 1, 2 oder 3, **dadurch gekennzeichnet, dass** das Verfahren ferner den folgenden Schritt aufweist:
Erzeugen eines Firewall- bzw. eines Schutzmechanismusdienstes als einen IP-Mehrwert-Dienst.

5. Verfahren nach Anspruch 1, 2, 3 oder 4, **dadurch gekennzeichnet, dass** das Verfahren ferner den folgenden Schritt aufweist:
Erzeugen eines Qualitätsklassendienstes als einen IP-Mehrwert-Dienst.

6. Verfahren nach Anspruch 1, 2, 3, 4 oder 5, **dadurch gekennzeichnet, dass** das Verfahren ferner den folgenden Schritt aufweist:
Erzeugen eines VPN-Dienstes als einen IP-Mehrwert-Dienst.

7. Verfahren nach Anspruch 1, 2, 3, 4, 5 oder 6, **dadurch gekennzeichnet, dass** das Verfahren ferner den folgenden Schritt aufweist:
Ausführen des Hinzufügens von wenigstens einer neuen IP-Adresse als eine Veränderung in der IP-Alias.

8. Verfahren nach Anspruch 1, 2, 3, 4, 5, 6 oder 7, **dadurch gekennzeichnet, dass** das Verfahren ferner den folgenden Schritt aufweist:
Ausführen des Löschens von wenigstens einer IP-Adresse als eine Veränderung in der IP-Alias.

9. Verfahren nach Anspruch 1, 2, 3, 4, 5, 6, 7 oder 8, **dadurch gekennzeichnet, dass** das Verfahren ferner den folgenden Schritt aufweist:
Ausführen des Hinzufügens von wenigstens einem neuen IP-Netz als eine Veränderung in der IP-Alias.

10. Verfahren nach Anspruch 1, 2, 3, 4, 5, 6, 7, 8 oder 9, **dadurch gekennzeichnet, dass** das Verfahren ferner den folgenden Schritt aufweist:
Ausführen des Löschens von wenigstens einem IP-Netz als eine Veränderung in der IP-Alias.

11. Verfahren nach Anspruch 1, 2, 3, 4, 5, 6, 7, 8, 9 oder 10, **dadurch gekennzeichnet, dass** das Verfahren ferner den folgenden Schritt aufweist:
Ausführen des Hinzufügens von wenigstens einer neuen IP-Alias als eine Veränderung in der IP-Alias.

12. Verfahren nach Anspruch 1, 2, 3, 4, 5, 6, 7, 8, 9, 10 oder 11, **dadurch gekennzeichnet, dass** das Verfahren ferner den folgenden Schritt aufweist:
Ausführen des Löschens von wenigstens einer IP-Alias als eine Veränderung in der IP-Alias.

## Revendications

1. Procédé pour la configuration centralisée d'un réseau de télécommunication, lequel réseau de télécommunication comprend un ou plusieurs réseaux IP, lequel réseau IP comprend un ensemble d'adresses IP, dans lequel réseau de télécommunication en question, des services IP à valeur ajoutée sont produits par des dispositifs de service et utilisés par des dispositifs utilisateurs, et lesquels dispositifs de service et dispositifs utilisateurs sont compris dans le réseau de télécommunication, et lequel procédé comprend les étapes consistant à :
générer un alias IP (10) pour les adresses IP et/ou les réseaux IP associés à un ou plusieurs desdits dispositifs utilisateurs, ledit alias IP étant utilisé comme au moins un paramètre par lesdits services IP à valeur ajoutée, et
changer (12) une ou plusieurs adresses IP et/ou un ou plusieurs réseaux IP dudit alias IP généré, ou changer au moins un paramètre de service desdits dispositifs utilisateurs associés audit alias IP généré,
**caractérisé en ce que** le procédé comprend en outre les étapes consistant à :
stocker, avant le changement susmentionné, dans une base de données de configuration (11) des informations de configuration desdits dispositifs de service, lesdites informations de configuration comprenant des informations sur ledit au moins un paramètre utilisé par lesdits services IP à valeur ajoutée, et
en réponse audit changement dans ledit alias IP, changer (13) en correspondance, dans lesdits dispositifs de service, ledit au moins un paramètre utilisé par lesdits services IP à valeur ajoutée en utilisant lesdites informations de configuration stockées, ledit au moins un paramètre étant changé dans chaque dispositif de service automatiquement et en parallèle en utilisant des fils de configuration parallèles pour chaque dispositif de service.

2. Procédé selon la revendication 1, **caractérisé en ce que** le procédé comprend en outre l'étape consistant à :
prévoir la même adresse IP dans plusieurs alias IP différents.

3. Procédé selon la revendication 1 ou 2, **caractérisé en ce que** le procédé comprend en outre l'étape consistant à :
prévoir le même réseau IP dans plusieurs alias IP différents.

4. Procédé selon la revendication 1, 2 ou 3, **caractérisé en ce que** le procédé comprend en outre l'étape consistant à :
générer un service de pare-feu en tant que service IP à valeur ajoutée.

5. Procédé selon la revendication 1, 2, 3 ou 4, **caractérisé en ce que** le procédé comprend en outre l'étape consistant à :
générer un service de classe de qualité en tant que service IP à valeur ajoutée.

6. Procédé selon la revendication 1, 2, 3, 4 ou 5, **caractérisé en ce que** le procédé comprend en outre l'étape consistant à :
générer un service VPN en tant que service IP à valeur ajoutée.

7. Procédé selon la revendication 1, 2, 3, 4, 5 ou 6, **caractérisé en ce que** le procédé comprend en outre l'étape consistant à :
procéder à l'ajout d'au moins une nouvelle adresse IP en tant que changement dans l'alias IP.

8. Procédé selon la revendication 1, 2, 3, 4, 5, 6 ou 7, **caractérisé en ce que** le procédé comprend en outre l'étape consistant à
procéder à la suppression d'au moins une adresse IP en tant que changement dans l'alias IP.

9. Procédé selon la revendication 1, 2, 3, 4, 5, 6, 7 ou 8, **caractérisé en ce que** le procédé comprend en outre l'étape consistant à :
procéder à l'ajout d'au moins un nouveau réseau IP en tant que changement dans l'alias IP.

10. Procédé selon la revendication 1, 2, 3, 4, 5, 6, 7, 8 ou 9, **caractérisé en ce que** le procédé comprend en outre l'étape consistant à :
procéder à la suppression d'au moins un réseau IP en tant que changement dans l'alias IP.

11. Procédé selon la revendication 1, 2, 3, 4, 5, 6, 7, 8, 9 ou 10, **caractérisé en ce que** le procédé comprend en outre l'étape consistant à :
procéder à l'ajout d'au moins un nouvel alias IP en tant que changement dans l'alias IP.

12. Procédé selon la revendication 1, 2, 3, 4, 5, 6, 7, 8, 9, 10 ou 11, **caractérisé en ce que** le procédé comprend en outre l'étape consistant à :
procéder à la suppression d'au moins un alias IP en tant que changement dans l'alias IP.
